# EUROPEAN PATENT APPLICATION

(11) **EP 4 395 276 A1**
(43) Date of publication of application: **03.07.2024**
(21) Application number: 23209020.9
(22) Date of filing: 10.11.2023
(51) Int. Cl.: H04L 61/5069, G09F 3/20, H04L 12/18, H04W 4/06, H04W 4/80, H04W 76/11, H04L 101/622

(54) **TWO-DIMENSIONAL ADDRESSING METHOD FOR LABELS BASED ON 2.4G PRIVATE PROTOCOL**

(30) Priority: 30.12.2022 CN 202211723032
(71) Applicant: Suzhou Etag-Technology Co., Ltd., 215001 Suzhou Jiangsu (CN)
(72) Inventor: LI, Bailiang, SUZHOU (CN); HUANG, Haipeng, SUZHOU (CN); XIA, Xinglong, SUZHOU (CN)
(74) Representative: Algemeen Octrooi- en Merkenbureau B.V.

(57) **Abstract**

The present invention discloses a two-dimensional addressing method for labels based on 2.4G private protocol, including: establishing, by a server, a two-dimensional addressing map based on MAC addresses of the labels in a system, and sending, through a base station AP, respective two-dimensional addresses to each of the labels for storage; accessing a database by the server, and distributing array map information and label data for updating to the base station AP, so that the base station AP sends the updated two-dimensional addressing map and the label data for updating to the label through broadcasting a signal by 2.4G; after receiving the broadcasted signal from the base station AP, automatically indexing, by the label, the array map information of the label and sending connection request information to the base station AP; and querying, by the base station AP, the MAC address of the label corresponding to the two-dimensional addressing map, connecting the label, and distributing the label data for updating to the label, so that the label performs a corresponding update action. According to the present invention, a few or a large number of electronic labels may be called based on requirements each time, thereby satisfying control requirements of the electronic label in a complex scenario.

## Description

### FIELD OF THE INVENTION

The present invention relates to the technical field of 2.4G communication, and in particular, to a two-dimensional addressing method for labels based on 2.4G private protocol.

### BACKGROUND OF THE INVENTION

Currently, addressing methods for Bluetooth or 2.4G electronic label protocols on the market are limited by cache of Bluetooth chips. As a result, electronic labels cannot be updated in large batch. For example, in a Bluetooth BEACON protocol, at most 31 bytes for RF cache, and even only 244 bytes for the 2.4G electronic label protocol, by a process of 6 bytes for a MAC address, only 5 label addresses may be processed by the Bluetooth at one time, and only 40 label addresses may be processed by the 2.4G electronic label protocol.

The foregoing electronic label addressing method is obviously no longer suitable for control requirements of large-scale label application scenarios (such as large supermarkets and large warehouses).

### SUMMARY OF THE INVENTION

For shortcomings in prior technologies, the present invention provides a two-dimensional addressing method for labels based on 2.4G private protocol. Addressing is merely available for a 2.4G private broadcasting protocol, so that a few or a large number of electronic labels may be called based on requirements each time, thereby satisfying control requirements of the electronic label in a complex scenario.

To achieve the foregoing objective, the present invention uses the following technical solutions.

A two-dimensional addressing method for labels based on 2.4G private protocol is provided, where the two-dimensional addressing method for the labels includes steps:
S1. establishing, by a server, a two-dimensional addressing map based on MAC addresses of labels in a system, and sending, through a base station AP, respective two-dimensional addresses to each of the labels for storage;
S2. accessing a database by the server, and proceeding to step S3 if there is a label data that needs to be updated; and otherwise, repeating step S2;
S3. setting a bit of a two-dimensional addressing map corresponding to a to-be-updated label to 1, and setting a bit of a two-dimensional addressing map of each of the remaining of the labels to 0, to obtain array map information of a label updated in this round; distributing the array map information and label data for updating to the base station AP, so that the base station AP sends the updated two-dimensional addressing map and the label data for updating to the label through broadcasting a signal by 2.4G; and after receiving the broadcasted signal from the base station AP, automatically indexing, by the label, the array map information of the label to determine whether a connection needs to be established for receiving the data for updating, and sending connection request information to the base station AP if the connection needs to be established; and
S4. receiving, by the base station AP, the connection request information sent by the label and querying the MAC address of the label corresponding to the two-dimensional addressing map; connecting the label and distributing the label data for updating to the label if the MAC address of the label exists, so that the label performs a corresponding update action; and meanwhile, setting, by the base station AP, the bit of the two-dimensional addressing map corresponding to the label to 0, and clearing a map area of the MAC address of the corresponding label.

Specific measures taken to optimize the foregoing technical solutions also include the following.

Further, in step S1, the process of the establishing, by a server, a two-dimensional addressing map based on MAC addresses of labels in a system includes steps:
setting a number X of rows and a number M of columns, where it is satisfied that X+M=V, and V is a maximum data length; and
setting an array map (L (x, y), R (m, n)) for each label, where L (x, y) represents a position of a column in which the label is located, x represents a column byte count for the label, y represents a byte bit count, R (m, n) represents a position of a row in which the label is located, m represents a row byte count for the label, n represents a byte bit count, x=0, 1, ..., or X-1, y=0, 1, ..., or 7, in units of bits, m=0, 1, ..., or M-1, and n=0, 1, ..., or 7.

Further, in step S3, the process of sending, by the base station AP, the updated two-dimensional addressing map and the label data for updating to the label through broadcasting the signal by 2.4G includes steps:
A31. initializing, by the base station AP, a 2.4G protocol stack, and clearing cache;
A32. monitoring whether there is network data that needs to be received, and if yes, proceeding to step A33, and otherwise, repeating the monitoring action in step A32;
A33. extracting the updated two-dimensional addressing map and generating a broadcast data packet, extracting the MAC address and label data for each label, and setting a broadcast timeout threshold;
A34. sending the broadcast data packet to the label through broadcasting the signal by 2.4G; if a label requests a connection and broadcast time does not reach the broadcast timeout threshold, querying the MAC address for the two-dimensional addressing map returned by the request label; and if the MAC address exists, connecting the label and distributing the label data to the label, and proceeding to step A35, and otherwise, returning to step A33;
A35. updating a label result, and updating the two-dimensional addressing map and a data zone; and
A36. determining whether all labels are updated, and if yes, generating an update result and outputting the update result to the server through a network to end the process, and otherwise, proceeding to step A32.

Further, in step S3, the process of the after receiving the broadcasted signal from the base station AP, automatically indexing, by the label, the array map information of the label to determine whether a connection needs to be established for receiving the data for updating includes steps:
B31. label initialization: extracting the MAC address and the two-dimensional addressing map that are sent by the base station to initialize a 2.4G protocol stack;
B32. activating Bluetooth scanning to monitor the broadcasted signal sent by the base station AP; if the broadcasted signal sent by the base station AP is monitored, extracting the two-dimensional addressing map from broadcast and comparing the two-dimensional addressing map with respective array map information, wherein if the comparison succeeds, proceeding to step B34; and otherwise, proceeding to step B33; and if no broadcasted signal is monitored, proceeding to step B33;
B33. sleeping for N seconds and then proceeding to step B32; and
B34. requesting to establish a connection with the base station AP, and after the connection is established, performing data interaction with the base station AP, to feed receiving completion information back to the base station AP.

Further, in step S4, the update action of the label includes updating the two-dimensional addressing map and updating data in the map area of the label.

Beneficial effects of the present invention are as below.

According to the two-dimensional addressing method for labels based on 2.4G private protocol in the present invention, addressing is available merely for a 2.4G private broadcasting protocol, so that a few or a large number of electronic labels may be called based on requirements each time, thereby satisfying control requirements of the electronic label in a complex scenario.

### BRIEF DESCRIPTION OF THE DRAWINGS

FIG. 1 is a flowchart of a two-dimensional addressing method for labels based on 2.4G private protocol according to an embodiment of the present invention;
FIG. 2 is a work flowchart of a base station AP according to an embodiment of the present invention; and
FIG. 3 is a work flowchart of a label according to an embodiment of the present invention.

### DETAILED DESCRIPTION OF THE EMBODIMENTS

The present invention is further described in detail with reference to the accompanying drawings.

It should be noted that terms used in the present invention, such as "upper", "lower", "left", "right", "front", and "back", are merely for clarity of description and are not intended to limit the implementable scope of the present invention. Changes or adjustments in relative relationships, without substantial changes in technical content, should also be considered to fall within the implementable scope of the present invention.

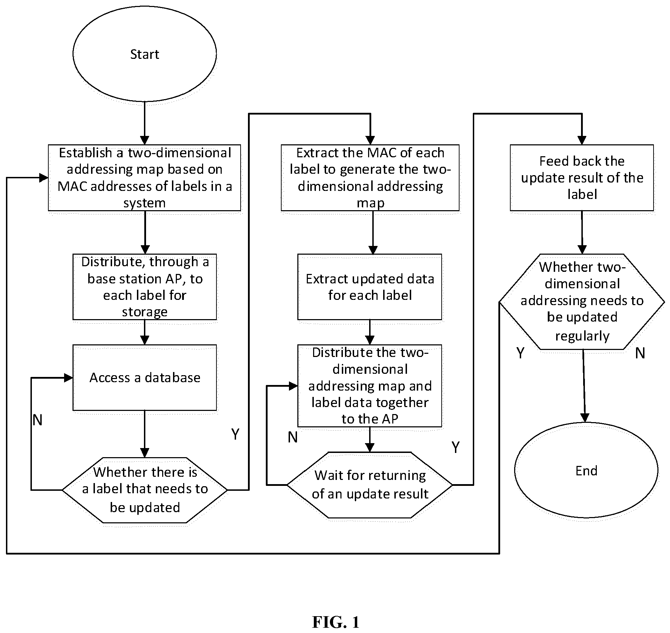

FIG. 1 is a flowchart of a two-dimensional addressing method for labels based on 2.4G private protocol according to an embodiment of the present invention. The two-dimensional addressing method for the labels includes steps.

S1. A server establishes a two-dimensional addressing map based on MAC addresses of labels in a system, and sends, through a base station AP, respective two-dimensional addresses to each of the labels for storage.

S2. The server accesses a database, where step S3 is proceeded to if there is a label data that needs to be updated; and otherwise, step S2 is repeated.

S3. Set a bit of a two-dimensional addressing map corresponding to a to-be-updated label to 1, and set a bit of a two-dimensional addressing map of each of the remaining of the labels to 0, to obtain array map information of a label updated in this round; and distribute the array map information and label data for updating to the base station AP, so that the base station AP sends the updated two-dimensional addressing map and the label data for updating to the label through broadcasting a signal by 2.4G, where after receiving the broadcasted signal from the base station AP, the label automatically indexes the array map information of the label to determine whether a connection needs to be established for receiving the data for updating, and sends connection request information to the base station AP if the connection needs to be established.

S4. The base station AP receives the connection request information sent by the label, queries the MAC address of the label corresponding to the two-dimensional addressing map, and connects the label and distributes the label data for updating to the label if the MAC address of the label exists, so that the label performs a corresponding update action; and meanwhile, the base station AP sets the bit of the two-dimensional addressing map corresponding to the label to 0, and clears a map area of the MAC address of the corresponding label.

As one of the preferred examples, in step S1, the process in which the server establishes the two-dimensional addressing map based on the MAC addresses of the labels in the system includes steps:
setting a number X of rows and a number M of columns, where it is satisfied that X+M=V, and V is a maximum data length; and
setting an array map (L (x, y), R (m, n)) for each label, where L (x, y) represents a position of a column in which the label is located, x represents a column byte count for the label, y represents a byte bit count, R (m, n) represents a position of a row in which the label is located, m represents a row byte count for the label, n represents a byte bit count, x=0, 1, ..., or X-1, y=0, 1, ..., or 7, in units of bits, m=0, 1, ..., or M-1, and n=0, 1, ..., or 7.

A format of data by 2.4G is shown in Table 1. A length of broadcast data may be 1-244 bytes. To ensure a characteristics of shorter transmission time of the broadcasted signal, only 31 bytes (other values are taken similarly) are taken in this embodiment. Excluding length, type, and checksum, an available data length is 1~29 bytes. In this embodiment, two-dimensional addressing is performed for 26 bytes only, and methods for contents of other byte are similar.

**Table 1 Format of Bluetooth Communication Data**

| | | | |
|---|---|---|---|
| Length (LEN) | Type (TYPE) | Data zone (DATA) | Checksum (SUM) |

In this embodiment, an array map (L (x, y), R (m, n)) is defined for each label.

The 26-byte two-dimensional addressing may be selected as 1*25, 2*24, 13*13, or the like, provided that a sum of rows and columns is 26.

A 26-byte two-dimensional addressing map is defined in table 2. A column is defined by L (x, y), where x represents a column byte count (0~12) of the label, and y represents a byte bit count (bit 7-0). A row is defined by R (m, n), where m represents a row byte count (0~12) of the label, and n represents a byte bit count (bit 7-0).

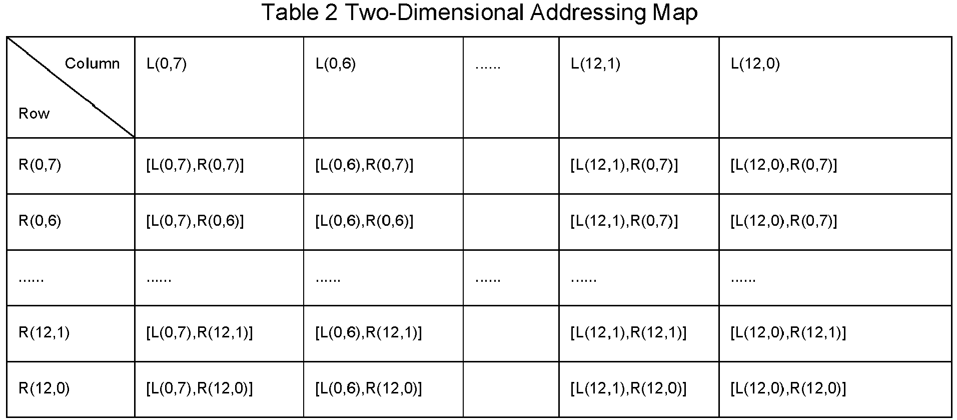

On this basis, a server in the background establishes the two-dimensional addressing map based on the MAC addresses of the labels in the system, for example, 3600000001: [L (0, 7), R (0, 7)] for the MAC address of the label. The two-dimensional address is distributed to each label through the base station AP for storage. The server regularly determines whether it needs to update the label. When the server needs to update a certain label or a batch of labels, the bit of the corresponding two-dimensional addressing map is set to 1, and the remaining bits are set to 0. The two-dimensional addressing map and the label data are distributed to the base station AP.

The base station AP sends the two-dimensional addressing map and the label data to the label through broadcasting a signal by 2.4G, and meanwhile sets a broadcast timeout threshold. The base station AP continues to broadcast signal when the broadcasting is not timed out, and no label connection signal is received or there are still labels that have not been updated. If the broadcasting is timed out or all labels are updated, an update result is generated and is sent to the server. After update information is received by the server, it is determined that the current update is completed. After receiving the broadcasted signal from the AP, the label automatically indexes the array map information of the label to determine whether a connection needs to be established for receiving the data for updating. If the updating is needed, connection is performed to the base station AP. The base station AP receives the connection information, and queries the MAC address corresponding to the two-dimensional addressing map. If the MAC address exists, the label is connected and the data is distributed to the label. After establishing a connection to the AP, the label performs data interaction until communication ends. The label performs the corresponding action, and meanwhile, the AP sets a bit of a MAC address corresponding to the two-dimensional addressing map to 0, and clears the map area of the MAC.

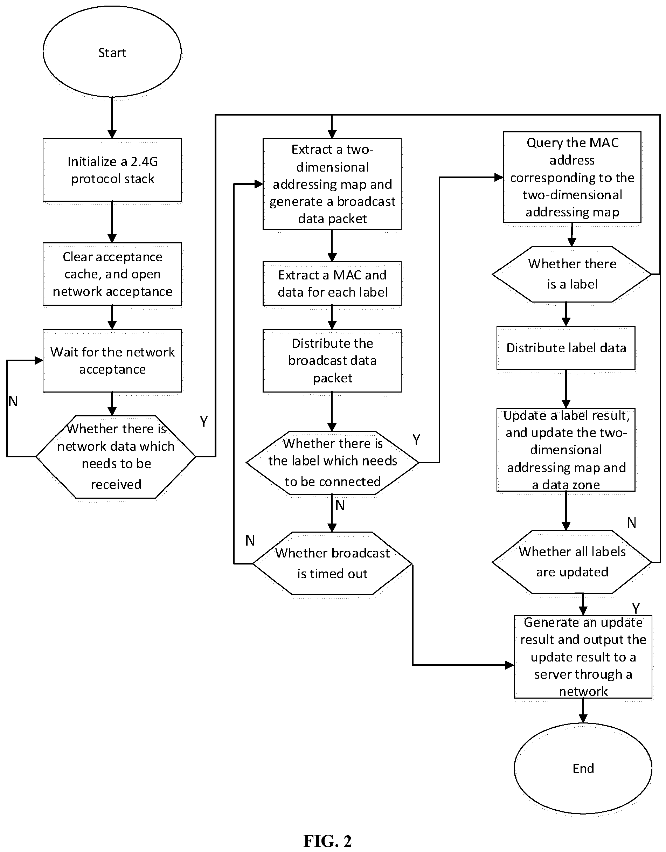

As shown in FIG. 2, in step S3, the process in which the base station AP sends the updated two-dimensional addressing map and the label data for updating to the label through broadcasting the signal by 2.4G includes steps.

A31. The base station AP initializes a 2.4G protocol stack, and clears cache.

A32. Monitor whether there is network data that needs to be received, and if yes, proceed to step A33, and otherwise, repeat the monitoring action in step A32.

A33. Extract the updated two-dimensional addressing map and generate a broadcast data packet, extract the MAC address and label data for each label, and set a broadcast timeout threshold.

A34. Send the broadcast data packet to the label through broadcasting the signal by 2.4G; if a label requests a connection and broadcast time does not reach the broadcast timeout threshold, query the MAC address for the two-dimensional addressing map returned by the request label; and if the MAC address exists, connect the label and distribute the label data to the label, and proceed to step A35, and otherwise, return to step A33;

A35. Update a label result, and update the two-dimensional addressing map and a data zone.

A36. Determine whether all labels are updated, and if yes, generate an update result and output the update result to the server through a network to end the process, and otherwise, proceed to step A32.

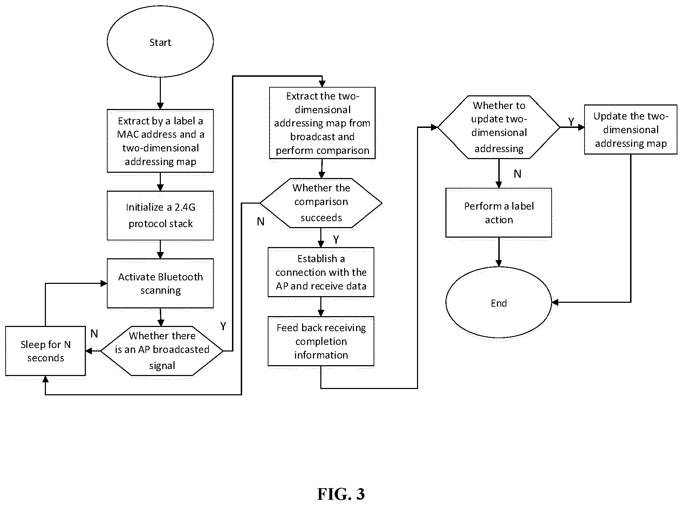

As shown in FIG. 3, in step S3, the process in which after receiving the broadcasted signal from the base station AP, the label automatically indexes the array map information of the label to determine whether a connection needs to be established for receiving the data for updating includes steps.

B31. Label initialization: Extract the MAC address and the two-dimensional addressing map that are sent by the base station to initialize a 2.4G protocol stack.

B32. Activate Bluetooth scanning to monitor the broadcasted signal sent by the base station AP; if the broadcasted signal sent by the base station AP is monitored, extract the two-dimensional addressing map from broadcast and compare the two-dimensional addressing map with respective array map information; if the comparison succeeds, proceed to step B34; and otherwise, proceed to step B33; and if no broadcasted signal is monitored, proceed to step B33.

B33. Sleep for N seconds and then proceed to step B32.

B34. Request to establish a connection with the base station AP, and after the connection is established, perform data interaction with the base station AP, to feed receiving completion information back to the base station AP.

In step S4, the update action of the label includes updating the two-dimensional addressing map and updating data in the map area of the label.

The foregoing descriptions are merely preferred implementations of the present invention, and the protection scope of the present invention is not limited to the foregoing embodiments. All technical solutions that fall within the idea of the present invention belong to the protection scope of the present invention. It should be pointed out that for persons of ordinary skills in the art, several improvements and modifications made without departing from the principle of the present invention should also be considered to fall within the protection scope of the present invention.

## Claims

1. A two-dimensional addressing method for labels based on 2.4G private protocol, **characterized by** that the two-dimensional addressing method for the labels comprises steps:
S1. establishing, by a server, a two-dimensional addressing map based on MAC addresses of labels in a system, and sending, through a base station AP, respective two-dimensional addresses to each of the labels for storage;
S2. accessing a database by the server, and proceeding to step S3 if there is a label data that needs to be updated; and otherwise, repeating step S2;
S3. setting a bit of a two-dimensional addressing map corresponding to a to-be-updated label to 1, and setting a bit of a two-dimensional addressing map of each of the remaining of the labels to 0, to obtain array map information of a label updated in this round; distributing the array map information and label data for updating to the base station AP, so that the base station AP sends the updated two-dimensional addressing map and the label data for updating to the label through broadcasting a signal by 2.4G; and after receiving the broadcasted signal from the base station AP, automatically indexing, by the label, the array map information of the label to determine whether a connection needs to be established for receiving the data for updating, and sending connection request information to the base station AP if the connection needs to be established; and
S4. receiving, by the base station AP, the connection request information sent by the label and querying the MAC address of the label corresponding to the two-dimensional addressing map; connecting the label and distributing the label data for updating to the label if the MAC address of the label exists, so that the label performs a corresponding update action; and meanwhile, setting, by the base station AP, the bit of the two-dimensional addressing map corresponding to the label to 0, and clearing a map area of the MAC address of the corresponding label.

2. The two-dimensional addressing method for labels based on 2.4G private protocol according to claim 1, wherein in step S1, the establishing, by a server, a two-dimensional addressing map based on MAC addresses of labels in a system comprises steps:
setting a number X of rows and a number M of columns, wherein X+M=V, and V is a maximum data length; and
setting an array map (L (x, y), R (m, n)) for each label, wherein: L (x, y) represents a position of a column in which the label is located, x represents a column byte count for the label, y represents a byte bit count; R (m, n) represents a position of a row in which the label is located, m represents a row byte count for the label, n represents a byte bit count; x=0, 1, ..., orX-1, y=0, 1, ..., or 7, in units of bits; and m=0, 1, ..., or M-1, and n=0, 1, ..., or 7.

3. The two-dimensional addressing method for labels based on 2.4G private protocol according to claim 1, wherein in step S3, sending, by the base station AP, the updated two-dimensional addressing map and the label data for updating to the label through broadcasting the signal by 2.4G comprises steps:
A31. initializing, by the base station AP, a 2.4G protocol stack, and clearing cache;
A32. monitoring whether there is network data that needs to be received, and if yes, proceeding to step A33, and otherwise, repeating the monitoring action in step A32;
A33. extracting the updated two-dimensional addressing map and generating a broadcast data packet, extracting the MAC address and label data for each label, and setting a broadcast timeout threshold;
A34. sending the broadcast data packet to the label through broadcasting the signal by 2.4G; if a label requests a connection and broadcast time does not reach the broadcast timeout threshold, querying the MAC address for the two-dimensional addressing map returned by the request label; and if the MAC address exists, connecting the label and distributing the label data to the label, and proceeding to step A35, and otherwise, returning to step A33;
A35. updating a label result, and updating the two-dimensional addressing map and a data zone; and
A36. determining whether all labels are updated, and if yes, generating an update result and outputting the update result to the server through a network to end the process, and otherwise, proceeding to step A32.

4. The two-dimensional addressing method for labels based on 2.4G private protocol according to claim 1, wherein in step S3, the after receiving the broadcasted signal from the base station AP, automatically indexing, by the label, the array map information of the label to determine whether a connection needs to be established for receiving the data for updating comprises steps:
B31. label initialization: extracting the MAC address and the two-dimensional addressing map that are sent by the base station to initialize a 2.4G protocol stack;
B32. activating Bluetooth scanning to monitor the broadcasted signal sent by the base station AP; if the broadcasted signal sent by the base station AP is monitored, extracting the two-dimensional addressing map from broadcast and comparing the two-dimensional addressing map with respective array map information, wherein if the comparison succeeds, proceeding to step B34; and otherwise, proceeding to step B33; and if no broadcasted signal is monitored, proceeding to step B33;
B33. sleeping for N seconds and then proceeding to step B32; and
B34. requesting to establish a connection with the base station AP, and after the connection is established, performing data interaction with the base station AP, to feed receiving completion information back to the base station AP.

5. The two-dimensional addressing method for labels based on 2.4G private protocol according to claim 1, wherein in step S4, the update action of the label comprises updating the two-dimensional addressing map and updating data in the map area of the label.
